# EUROPEAN PATENT APPLICATION

(11) **EP 4 818 264 A1**
(43) Date of publication of application: **07.10.2026**
(21) Application number: 24909366.7
(22) Date of filing: 02.02.2024
(51) Int. Cl.: C08L 97/02, C08J 9/12, C08L 3/02, C08L 5/00, C08L 89/00

(54) **PREPARATION METHOD FOR LOW-DENSITY PLANT FIBER-BASED FOAM MATERIAL, PRODUCT, AND USE**

(30) Priority: 29.12.2023 CN 202311850002
(71) Applicant: Suzhou HSM Technologies, Suzhou, Jiangsu 215000 (CN)
(72) Inventor: LIU, Zixuan, Suzhou, Jiangsu 215000 (CN); TAI, Qilong, Suzhou, Jiangsu 215000 (CN); WU, Chencheng, Suzhou, Jiangsu 215000 (CN)
(74) Representative: Chung, Hoi Kan
(86) International application number: PCT/CN2024/075409
(87) International publication number: WO 2025/138394

(57) **Abstract**

The invention provides a method for preparing a low-density plant fiber foam material, and a product and use thereof. The method includes: Step 1: thoroughly mixing raw materials including an aqueous suspension of plant fibers, a biomass adhesive, a compatibilizer, a plasticizer, and a nucleating agent to obtain a foamable slurry; and Step 2: performing heat-foaming on the foamable slurry to prepare the low-density plant fiber foam material. In the preparation method disclosed in the present invention, a low-density (a density ≤ 100 kg/m³) and naturally degradable plant fiber foam material is prepared via physical foaming using an aqueous suspension of plant fibers as a raw material and a natural biomass adhesive, and can be used as a packaging material. Furthermore, the plant fiber foam material exhibits excellent appearance properties, making it particularly suitable for the field of premium packaging materials with higher requirements for appearance properties.

## Description

### FIELD OF THE INVENTION

The present invention relates to the field of foam material technologies, and in particular, to a method for preparing a low-density plant fiber foam material, and a product and use thereof.

### DESCRIPTION OF THE RELATED ART

At present, the most widely used cushioning materials in quality packaging in China include expanded polystyrene (EPS), ethylene-vinyl acetate copolymer (EVA), and molded pulp, etc. EPS and EVA are petroleum-based foam materials that are low in cost but difficult to biodegrade. Once discarded and landfilled, they persist in soil for centuries without microbial decomposition. With the implementation of "Plastic Restriction Policy", EPS and EVA are expected to be gradually replaced by biodegradable premium packaging materials. Molded pulp, primarily made from plant fibers, is naturally degradable and can also be recycled through paper recycling systems. However, due to its dense structure and high rigidity, it fails to provide adequate cushioning performance, while its high density increases transportation costs. These factors significantly limit the application of molded pulp in premium packaging.

A plant fiber foam material is prepared from natural plant fibers as raw materials, supplemented with adhesives, plasticizers, foaming agents, nucleating agents, etc., through heat-foaming or freeze-drying. Plant fiber foam materials are materials with the closest properties to petroleum-based foam materials and holds the greatest potential to replace them.

For example, Chinese Patent Document Publication No. CN102977625A provides a plant fiber foam packaging board, along with its processing technology and mold. The plant fiber foam packaging board is prepared through four processes: mixing plant fibers with additives, vacuum filtration, microwave foaming, and hot-air drying. The disclosed additives include a foaming agent, a film-forming agent, and an adhesive. The foaming agent is a mixture of azodicarbonamide and ammonium bicarbonate, the film-forming agent is polyvinyl alcohol, and the adhesive is starch. However, the polyvinyl alcohol (PVA) used in this formulation is a petroleum-based polymer material, which significantly impairs the natural degradability of the product. Moreover, the prepared product exhibits numerous voids on its surface, failing to meet the aesthetic requirements of premium packaging.

For another example, Chinese Patent Document Publication No. CN105713409A provides a fully degradable cellulose foam material. The material is obtained by uniformly mixing modified plant fibers, hydroxypropyl starch, poly(butylene succinate), nano-calcium carbonate, a composite crosslinking agent, a composite foaming agent, stearic acid, and liquid paraffin, followed by extrusion granulation and expansion or compression molding. The foaming agent used is a composite foaming agent composed of diisopropyl azodicarboxylate (DIAD) and azodicarbonamide (AC). The decomposition product NH₃ of the foaming agent not only causes environmental pollution but also poses safety hazards.

For another example, Chinese Patent Document Publication No. CN102505579A provides a method for preparing a plant fiber cushioning material. Using plant fibers as a starting raw material and adopting a wet forming process, the material is directly prepared through sequential steps including water addition and defibration, mold placement, dewatering forming, and drying and finishing. This technical solution avoids the addition of external raw materials such as crosslinking agents and binders. However, the density of the resulting product only ranges from 100 kg/m³ to 200 kg/m³.

For still another example, Chinese Patent Document Publication No. CN108624073A discloses a plant fiber foam material and a production method thereof. The material includes 40 to 50 parts of plant fibers, 10 to 20 parts of an adhesive, 15 to 30 parts of a surfactant, 10 to 20 parts of aerogel, and 0.5 to 2 parts of a foaming agent, with the adhesive further limited to at least one of polyurethane-based and resin-based adhesives. The density of the foam material prepared by this technical solution ranges from 76.3 kg/m³ to 92.3 kg/m³. However, the use of a petroleum-based polymer material as the adhesive still significantly impairs the natural degradability of the product.

In summary, existing plant fiber foam materials all have certain drawbacks: some incorporate petroleum-based polymer materials, others use chemical foaming agents that pose adverse environmental or safety impacts, some exhibit poor surface aesthetics, or others have a relatively high density. Therefore, improvements are necessary.

### SUMMARY OF THE INVENTION

For the foregoing technical problems in the prior art, the present invention discloses a method for preparing a degradable plant fiber foam material. A low-density (a density ≤ 100 kg/m³) and naturally degradable plant fiber foam material is prepared via physical foaming method using an aqueous suspension of plant fibers as a raw material and a biomass adhesive, and can be used as a packaging material. Furthermore, the plant fiber foam material exhibits excellent appearance properties, making it particularly suitable for the field of premium packaging materials with higher requirements for appearance properties.

Specific technical solutions are as follows.

A method for preparing a low-density plant fiber foam material includes the following steps:
Step 1: thoroughly mixing raw materials including an aqueous suspension of plant fibers, a biomass adhesive, a compatibilizer, a plasticizer, and a nucleating agent to obtain a foamable slurry, where
   a concentration of the aqueous suspension of the plant fibers ranges from 6 wt% to 40 wt%, and
   a mass ratio of a dry weight of the plant fibers in the aqueous suspension to the biomass adhesive ranges from 3:1 to 19:1; and
Step 2: performing heat-foaming on the foamable slurry to prepare the low-density plant fiber foam material.

The present invention discloses a method for preparing a degradable plant fiber foam material. A low-density and naturally degradable plant fiber foam material is prepared via physical foaming using an aqueous suspension of plant fibers as a raw material and a natural biomass adhesive. The density and appearance properties of the prepared plant fiber foam material is regulated by regulating the concentration of the aqueous suspension of the plant fibers and the mass ratio of the dry weight of the plant fiber in the aqueous suspension to the biomass adhesive.

It is found through experiments that when the concentration of the aqueous suspension of the plant fibers is controlled within 6 wt% to 40 wt%, it can be ensured that the density of the finally prepared plant fiber foam material is less than or equal to 100 kg/m³. When the concentration is excessively low (for example, 5 wt%), the density may increase, and the appearance properties of the foam material deteriorates significantly, resulting in numerous depressions and holes on the surface of the product.

Preferably, the concentration of the aqueous suspension of the plant fibers ranges from 25 wt% to 35 wt%. In this case, the appearance properties of the prepared plant fiber foam material is better, the surface of the product is smooth and flat and free of visible holes. Further optionally, the concentration of the aqueous suspension of the plant fibers is 35 wt%. In this case, the prepared plant fiber foam material has a lower density and a lower compressive strength at 50% strain.

It is found through experiments that the mass ratio of the dry weight of the plant fibers in the aqueous suspension to the biomass adhesive also significantly affects the density and appearance properties of the finally prepared plant fiber foam material. When the mass ratio of the dry weight of the plant fibers to the biomass adhesive ranges from 3:1 to 19:1, the density of the prepared plant fiber foam material is lower than 80 kg/m³. When the mass ratio is excessively large (for example, 20:1), the density increases significantly, and the appearance properties of the foam material deteriorates significantly, resulting in numerous depressions and holes on the surface of the product.

Preferably, the mass ratio of the dry weight of the plant fibers to the biomass adhesive ranges from 3:1 to 10:1. In this case, the prepared plant fiber foam material has a lower density and a lower compressive strength at 50% strain as well as better appearance properties.

In Step 1:
The aqueous suspension of the plant fibers is obtained from a plant fiber pulp board as a raw material through defibration and dewatering.

In this case, the dry weight of the plant fibers is the mass of the used plant fiber pulp board.

The plant fiber pulp board is prepared from one or more raw materials selected from softwood pulp fibers, hardwood pulp fibers, bamboo pulp fibers, bagasse pulp fibers, and rice straw pulp fibers.

In Step 1:
The biomass adhesive is selected from the group consisting of starch, sodium alginate, soy protein, xanthan gum, carrageenan, guar gum, gelatin, locust bean gum and and any combination thereof.

Preferably, the biomass adhesive is selected from starch, or a mixture of starch and one or more of sodium alginate, soy protein, xanthan gum, carrageenan, guar gum, gelatin, and locust bean gum.

Further optionally, the biomass adhesive is selected from mixtures of starch and other types of biomass adhesives, for example, a mixture of starch, xanthan gum, and guar gum, and a mixture of starch and gelatin.

It is found through experiments that with the foregoing preferable types of biomass adhesives, the density of the finally prepared plant fiber foam material can be further reduced, and the appearance properties of the plant fiber foam material can be improved.

The compatibilizer is selected from the group consisting of citric acid, stearic acid, magnesium stearate, calcium stearate, sodium borate, gallic acid, erucamide and any combination thereof.

Preferably, the compatibilizer is selected from citric acid, or a mixture of citric acid and one or more of stearic acid, magnesium stearate, calcium stearate, sodium borate, gallic acid, and erucamide.

It is found through experiments that when citric acid alone or a mixture that contains citric acid is used as the compatibilizer, the density of the finally prepared plant fiber foam material can be further reduced.

The type of the plasticizer is not specially required in the present invention, and a common type such as water, glycerol, sorbitol, ethylene glycol, formamide, or urea in the field may be selected.

The type of the nucleating agent is also not specially required in the present invention, and a common type such as nano-silica, talc, sodium montmorillonite, calcium carbonate, or sodium chloride in the field may be selected.

In step 1. a mass ratio of the biomass adhesive, the compatibilizer, the plasticizer, and the nucleating agent is 100:(2 to 20):(30 to 80):(10 to 40), and preferably, is 100:(5 to 15):(30 to 50):(20 to 40).

In Step 2:
The heat-foaming uses a conventional heating device in the field, for example, one or more of a microwave heater, a flat vulcanizing press, and a hot-air dryer.

The temperature of the heat-foaming ranges from 100°C to 210°C.

Preferably, the temperature of the heat-foaming ranges from 120°C to 210°C. Further preferably, the temperature of the heat-foaming ranges from 140°C to 210°C, and the density of the plant fiber foam material prepared at the foaming temperature is lower. Still further preferably, the temperature of the heat-foaming ranges from 140°C to 160°C, and the plant fiber foam material prepared at the foaming temperature has both a low density and excellent appearance properties.

The present invention further discloses a low-density plant fiber foam material prepared using the foregoing method, and the density is less than or equal to 100 kg/m³. Preferably, the density ranges from 25 kg/m³ to 100 kg/m³.

The present invention further discloses use of the low-density plant fiber foam material in a packaging material, making it particularly suitable for the field of premium packaging materials with higher requirements for appearance properties.

Compared with the prior art, the present invention has the following advantages:
The present invention discloses a method for preparing a degradable plant fiber foam material. A low-density and naturally degradable plant fiber foam material is prepared via physical foaming using an aqueous suspension of plant fibers as a raw material and a natural biomass adhesive. A natural biomass adhesive is used in place of a petroleum-based polymer adhesive such as PVA to bond plant fibers and form a continuous phase, so that the prepared foam material is naturally degradable. Physical foaming using water vapor is used in place of chemical foaming agents, thereby reducing adverse impacts of the chemical foaming agents on the environmental or product. More importantly, the density and appearance properties of the prepared plant fiber foam material can be regulated by using the foregoing types of raw materials and regulating the concentration of the aqueous suspension of the plant fibers and the mass ratio of the dry weight of the plant fibers in the aqueous suspension to the biomass adhesive, thereby preparing the low-density plant fiber foam material.

The density of the low-density plant fiber foam material prepared in the present invention is less than or equal to 100 kg/m³, preferably is less than or equal to 80 kg/m³, further preferably is less than or equal to 55 kg/m³, still further preferably is less than or equal to 35 kg/m³, and can be as low as 25 kg/m³. In addition, the plant fiber foam material exhibits excellent appearance properties, making it suitable for the field of packaging materials, and particularly suitable for the field of premium packaging materials.

### BRIEF DESCRIPTION OF THE DRAWINGS

FIG. 1 is a photograph of a plant fiber foam material prepared in Example 1;
FIG. 2 is a photograph of a plant fiber foam material prepared in Example 2;
FIG. 3 is a photograph of a plant fiber foam material prepared in Example 4;
FIG. 4 is a photograph of a plant fiber foam material prepared in Comparative example 1;
FIG. 5 is a photograph of a plant fiber foam material prepared in Example 7; and
FIG. 6 is a photograph of a plant fiber foam material prepared in Comparative example 2.

### DETAILED DESCRIPTION OF THE PREFERRED EMBODIMENTS

To further understand the present invention, the present invention is specifically described below in conjunction with the examples and accompanying drawings. However, the present invention is not limited to these examples. Non-essential improvements and adjustments made by those skilled in the art under the core guiding concept of the present invention still fall within the scope of protection of the present invention.

In accordance with the standard GB/T 8168-2008, the density and static compression properties of the plant fiber foam materials prepared in the examples or the comparative examples were tested.

### Example 1

Step 1: 6 kg of a plant fiber pulp board (a mass ratio of a softwood pulp fiber pulp board to a bamboo pulp fiber pulp board is 7:3) and 180 kg of water were added to a pulper, defibering was performed at a rotation speed of 30 Hz for 30 minutes, and the resulting slurry was discharged and dewatered for 10 min to obtain an aqueous suspension of the plant fiber with a concentration of 35 wt%.

Step 2: the aqueous suspension of the plant fibers with a concentration of 35 wt%, 1 kg of a biomass adhesive composed of starch, xanthan gum, and guar gum (with a mass ratio of 5:3:2), 0.3 kg of glycerol, 0.1 kg of a compatibilizer composed of citric acid and calcium stearate (with a mass ratio of 8:2), and 0.3 kg of talc were placed in a kneader, and the kneader was set to knead at a temperature of 85°C and a rotation speed of 40 Hz for 70 min to obtain foamable slurry.

Step 3: the foamable slurry was divided into pieces of approximately 1.3 kg via a metering system, and the foamable slurry was conveyed into molds by a conveyor belt.

Step 4: the filled foaming molds were continuously conveyed into a microwave heater, and the foaming molds were heated to 140°C for foaming. The molds were removed from the outlet of the microwave heater, and demolding and punching were performed to obtain a low-density plant fiber foam material.

The density and the compressive strength at 50% strain of the plant fiber foam material prepared in this example are listed in the following Table 1.

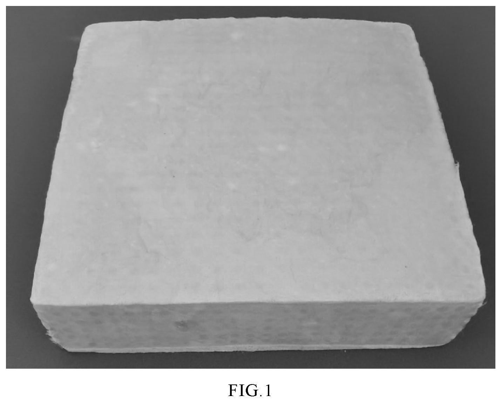

FIG. 1 is a photograph of the plant fiber foam material prepared in this example. The surface of the product is smooth and flat and free of visible holes.

### Example 2

The preparation process is substantially the same as that in Example 1, and the difference only lies in that:
The dewatering in Step 1 was performed for 2 min to obtain an aqueous suspension of the plant fibers with a concentration of 6 wt%.

The density and the compressive strength at 50% strain of the plant fiber foam material prepared in this example are listed in the following Table 1.

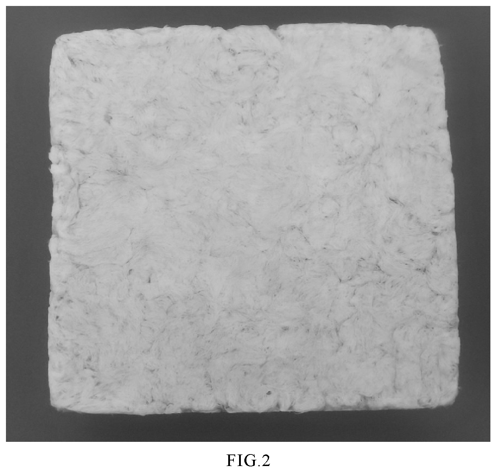

FIG. 2 is a photograph of the plant fiber foam material prepared in this example. Upon observation, the surface flatness of the plant fiber foam material is good, but numerous visible holes are present on the surface.

### Example 3

The preparation process is substantially the same as that in Example 1, and the difference only lies in that:
The dewatering in Step 1 was performed for 8 min to obtain an aqueous suspension of the plant fibers with a concentration of 25 wt%.

The density and the compressive strength at 50% strain of the plant fiber foam material prepared in this example are listed in the following Table 1.

Upon observation, the surface of the plant fiber foam material prepared in this example is smooth, flat and free of visible holes, and the appearance properties are similar to those in Example 1.

### Example 4

The preparation process is substantially the same as that in Example 1, and the difference only lies in that:
The dewatering in Step 1 was performed for 15 min to obtain an aqueous suspension of the plant fibers with a concentration of 40 wt%.

The density and the compressive strength at 50% strain of the plant fiber foam material prepared in this example are listed in the following Table 1.

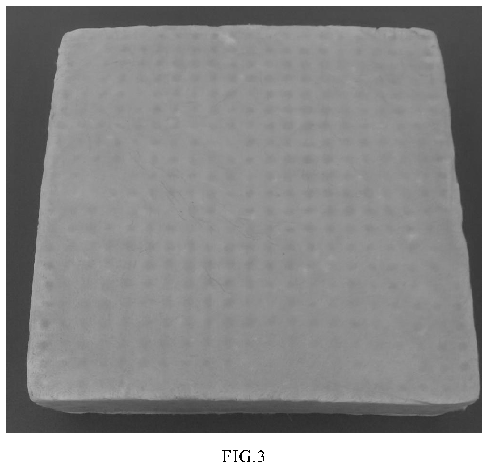

FIG. 3 is a photograph of the plant fiber foam material prepared in this example. The surface flatness of the plant fiber foam material is good, but visible holes are present on the surface.

### Comparative example 1

The preparation process is substantially the same as that in Example 1, and the difference only lies in that:
The dewatering in Step 1 was performed for 1 min to obtain an aqueous suspension of the plant fibers with a concentration of 5 wt%.

The density and the compressive strength at 50% strain of the plant fiber foam material prepared in this comparative example are listed in the following Table 1.

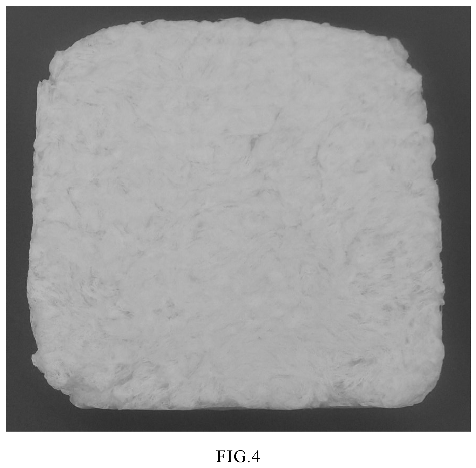

FIG. 4 is a photograph of the plant fiber foam material prepared in this comparative example. The surface flatness of the plant fiber foam material is inadequate, and numerous depressions and visible holes are present.

### Example 5

The preparation process is substantially the same as that in Example 1, and the difference only lies in that:
The mass of the biomass adhesive in Step 2 was 2 kg. In this case, the mass ratio of the dry weight of the plant fiber pulp board added in Step 1 to the biomass adhesive was 3:1.

The density and the compressive strength at 50% strain of the plant fiber foam material prepared in this example are listed in the following Table 1.

Upon observation, the surface of the product prepared in this example is smooth, flat and free of visible holes, which is close to that in Example 1.

### Example 6

The preparation process is substantially the same as that in Example 1, and the difference only lies in that:
The mass of the biomass adhesive in Step 2 was 0.6 kg. In this case, the mass ratio of the dry weight of the plant fiber pulp board added in Step 1 to the biomass adhesive was 10:1.

The density and the compressive strength at 50% strain of the plant fiber foam material prepared in this example are listed in the following Table 1.

Upon observation, the surface of the product prepared in this example is smooth, flat and free of visible holes, which is close to that in Example 1.

### Example 7

The preparation process is substantially the same as that in Example 1, and the difference only lies in that:
The mass of the biomass adhesive in Step 2 was 0.32 kg. In this case, the mass ratio of the dry weight of the plant fiber pulp board added in Step 1 to the biomass adhesive was 19:1.

The density and the compressive strength at 50% strain of the plant fiber foam material prepared in this example are listed in the following Table 1.

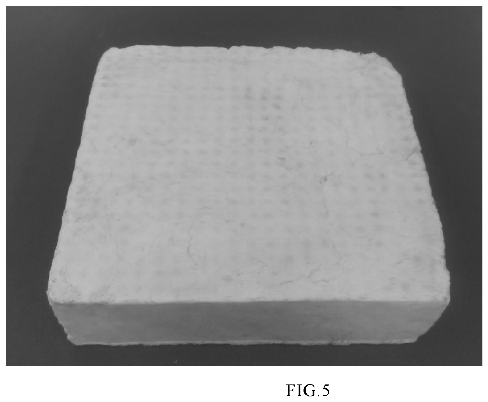

FIG. 5 is a photograph of the plant fiber foam material prepared in this example. The surface flatness of the plant fiber foam material is good, but numerous visible holes are present.

### Comparative example 2

The preparation process is substantially the same as that in Example 1, and the difference only lies in that:
The mass of the biomass adhesive in Step 2 was 0.3 kg. In this case, the mass ratio of the dry weight of the plant fiber pulp board added in Step 1 to the biomass adhesive was 20:1.

The density and the compressive strength at 50% strain of the plant fiber foam material prepared in this example are listed in the following Table 1.

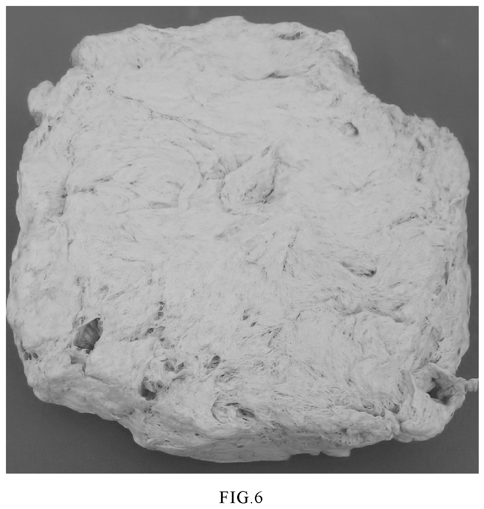

FIG. 6 is a photograph of the plant fiber foam material prepared in this comparative example. The surface flatness of the plant fiber foam material is inadequate, and numerous depressions and visible holes are present.

### Examples 8 to Examples 11

The preparation process is substantially the same as that in Example 1, and the difference only lies in that:
The temperature of the heat-foaming in Step 4 was sequentially 120°C, 160°C, 190°C, and 210°C for examples 8 to examples 11.

Upon observation, when the temperature of the heat-foaming is 120°C, the surface flatness of the prepared product is good, but a small number of visible holes are present.

When the temperature of the heat-foaming is 160°C, the appearance of the prepared product is similar to that in Example 1.

When the temperature of the heat-foaming ranges from 190°C to 210°C, the appearance of the prepared product is similar to that in Example 1, but yellowing occurs.

### Example 12

The preparation process is substantially the same as that in Example 1, and the difference only lies in that in Step (2):
Starch alone was used as the biomass adhesive, and the compatibilizer was replaced with a mixture of citric acid, sodium borate, and magnesium stearate (with a mass ratio of 2:2:1). The dosages of the biomass adhesive and the compatibilizer remain unchanged.

The density and the compressive strength at 50% strain of the plant fiber foam material prepared in this example are listed in the following Table 1.

Upon observation, the surface flatness of the product prepared in this example is good, but a small number of visible holes are present.

### Example 13

The preparation process is substantially the same as that in Example 1, and the difference only lies in that in Step (2):
The biomass adhesive was replaced with a mixture of starch and gelatin (with a mass ratio of 3:2), and the compatibilizer was replaced with a mixture of sodium borate and erucamide (with a mass ratio of 7:3).

The density and the compressive strength at 50% strain of the plant fiber foam material prepared in this example are listed in the following Table 1.

Upon observation, the surface of the product prepared in Example 13 is smooth, flat and free of visible holes, which is close to that in Example 1.

**Table 1**

| No. | Density (kg/m³) | Compressive strength at 50% strain (kPa) |
|---|---|---|
| Example 1 | 25 | 40 |
| Example 2 | 97 | 166 |
| Example 3 | 35 | 56 |
| Example 4 | 53 | 80 |
| Comparative example 1 | 109 | / |
| Example 5 | 25 | 43 |
| Example 6 | 28 | 45 |
| Example 7 | 77 | 102 |
| Comparative example 2 | 133 | / |
| Example 8 | 80 | 130 |
| Example 9 | 30 | 53 |
| Example 10 | 28 | 44 |
| Example 11 | 33 | 56 |
| Example 12 | 77 | 180 |
| Example 13 | 64 | 157 |

The above descriptions are merely specific implementations of the present invention, but the scope of protection of the present invention is not limited thereto. The specific examples used above are for describing the present invention and are intended to facilitate understanding of the present invention, and are not intended to limit the present invention. Those skilled in the art to which the present invention pertains may make several simple deductions, variations, substitutions, or combinations based on the concept of the present invention. These deductions, variations, substitutions, or combinations also fall within the scope of the claims of the present invention.

## Claims

1. A method for preparing a low-density plant fiber foam material, comprising:
Step 1: thoroughly mixing an aqueous suspension of plant fibers, a biomass adhesive, a compatibilizer, a plasticizer, and a nucleating agent to obtain a foamable slurry, wherein
a concentration of the aqueous suspension of the plant fibers ranges from 6 wt% to 40 wt%, and
a mass ratio of a dry weight of the plant fibers in the aqueous suspension to the biomass adhesive ranges from 3:1 to 19:1; and
Step 2: performing heat-foaming on the foamable slurry to prepare the low-density plant fiber foam material.

2. The method for preparing a low-density plant fiber foam material according to claim 1, wherein in Step 1:
the aqueous suspension of the plant fibers is obtained from a plant fiber pulp board as a raw material through defibration and dewatering; and
the plant fiber pulp board is prepared from a raw material selected from the group consisting of a softwood pulp fiber, a hardwood pulp fiber, a bamboo pulp fiber, a bagasse pulp fiber, a rice straw pulp fiber and any combination thereof.

3. The method for preparing a low-density plant fiber foam material according to claim 1, wherein in Step 1:
the biomass adhesive is selected from the group consisting of starch, sodium alginate, soy protein, xanthan gum, carrageenan, guar gum, gelatin, locust bean gum and any combination thereof; and
the compatibilizer is selected from the group consisting of citric acid, stearic acid, magnesium stearate, calcium stearate, sodium borate, gallic acid, erucamide and any combination thereof.

4. The method for preparing a low-density plant fiber foam material according to claim 1, wherein in Step 1:
a mass ratio of the biomass adhesive, the compatibilizer, the plasticizer, and the nucleating agent is 100:(2 to 20):(30 to 80):(10 to 40);
the plasticizer is selected from the group consisting of water, glycerol, sorbitol, ethylene glycol, formamide, urea and any combination thereof; and
the nucleating agent is selected from the group consisting of nano-silica, talc, sodium montmorillonite, calcium carbonate, sodium chloride and any combination thereof.

5. The method for preparing a low-density plant fiber foam material according to claim 1, wherein in Step 2, a foaming temperature ranges from 100°C to 210°C.

6. The method for preparing a low-density plant fiber foam material according to any one of claims 1 to 5, wherein
the biomass adhesive is selected from starch, or a mixture of starch and one or more of sodium alginate, soy protein, xanthan gum, carrageenan, guar gum, gelatin, and locust bean gum; and
the compatibilizer is selected from citric acid, or a mixture of citric acid and one or more of stearic acid, magnesium stearate, calcium stearate, sodium borate, gallic acid, and erucamide.

7. The method for preparing a low-density plant fiber foam material according to claim 6, wherein the mass ratio of the dry weight of the plant fibers in the aqueous suspension to the biomass adhesive ranges from 3:1 to 10:1.

8. The method for preparing a low-density plant fiber foam material according to claim 7, wherein the temperature of the heat-foaming ranges from 120°C to 210°C.

9. A low-density plant fiber foam material prepared by the method according to any one of claims 1 to 8, wherein a density of the low-density plant fiber foam material is less than or equal to 100 kg/m³.

10. Use of the low-density plant fiber foam material according to claim 9 in a packaging material.
